# FASCICULE DE BREVET EUROPEEN

(11) **EP 1 760 952 B1**
(45) Date de publication et mention de la délivrance du brevet: **18.01.2012**
(21) Numéro de dépôt: 06119093.0
(22) Date de dépôt: 17.08.2006
(51) Int. Cl.: H04L 12/403, H04L 25/02

(54) **Procédé de commande de la vitesse de communication sur un bus LIN**
Verfahren zur Steuerung der Übertragungsgeschwindigkeit auf einem LIN bus
Method for controlling the transmission speed on a LIN bus

(30) Priorité: 02.09.2005 FR 0509005
(43) Date de publication de la demande: 07.03.2007
(73) Titulaire: Valeo Systèmes Thermiques, 78321 Le Mesnil St Denis Cedex (FR)
(72) Inventeur: Moreau, Fabrice M. Valeo Systemes Thermiques, 94000, Creteil (FR)
(74) Mandataire: Vieillevigne, Sébastien Nicolas Bernard

(56) Documents cités:
- WO-A-2004/036821
- RUFF M: "Evolution of local interconnect network (LIN) solutions" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 octobre 2003 (2003-10-06), pages 3382-3389, XP010702546 ISBN: 0-7803-7954-3
- STPHAN REY: "Introduction to LIN" INTRODUCTION TO LIN, 13 mai 2003 (2003-05-13), pages 1-11, XP002263434

## Description

La présente invention se rapporte au domaine général du fonctionnement des modules destinés à être connectés à un bus série de communication selon le protocole LIN.

Les bus série de communication sont communément utilisés pour les communications entre les différents éléments électroniques présents dans un véhicule. Ces éléments électroniques sont par exemple, des indicateurs, des capteurs intelligents et des actionneurs, ainsi mis en réseau par l'intermédiaire de tels bus série.

Dans les applications automobiles, les indicateurs, capteurs et actionneurs concernent, par exemple, le système d'air conditionné, les portes (ouverture...) les ceintures, les sièges, les mesures de température, les commandes manuelles, les essuie-glaces, les déclencheurs de toit ouvrant...

Parmi les bus série de communication, certains sont particulièrement adaptés à une application automobile. C'est le cas du bus selon le protocole LIN.

Le protocole LIN a été développé, notamment, afin de limiter le coût de l'installation d'un réseau entre les différents capteurs et actuateurs présents dans une voiture. En effet, les réseaux précédemment utilisés étaient réalisés avec des bus de communication coûteux et généralement sous-exploités.

Les bus de communication selon le protocole LIN présentent peu de compatibilité avec les autres protocoles connus de bus série mais présentent, en revanche, d'autres avantages pour les applications automobiles. Ainsi, les bus selon le protocole LIN fonctionnent sur 12 Volts ce qui les rend particulièrement adaptés aux applications automobiles dans lesquelles la batterie fonctionne précisément à ce voltage.

La vitesse de communication sur le bus est faible avec un débit standard unique fixé selon les spécifications du protocole LIN à respectivement 2400, 9600 ou 19200 bauds, la communication étant basée sur un mécanisme maître/esclave.

Or, une telle unicité de la vitesse de communication limite les possibilités d'utilisation du bus LIN en interdisant de faire cohabiter ensemble des équipements de véhicule fonctionnant à des vitesses de communication différentes.

Il est également connu dans un système fonctionnant selon le protocole LIN d'émettre par le maître des données en utilisant une vitesse de transmission variable. Dans ce cas, l'esclave adapte son horloge de réception aux différentes vitesses de transmission utilisées par le maître. Une telle approche est décrite dans la demande internationale W02004/036821 et dans l'article de Ruff, intitulé "Evolution of local interconnect network (LIN) solutions", Vehicular Technology Conference 2003, publié le 6 octobre 2003, pages 3382-3389, XP010702546, ISBN: 0-7803-7954-3.

Cependant, aucun enseignement ne peut être trouvé dans ces documents quant à la question de savoir à quelle vitesse s'effectue la communication dans l'autre direction, c.-à-d. d'un esclave au maître.

La présente invention a donc pour but principal de pallier ces inconvénients en proposant un système de transmission de données comportant un module maître et des modules esclaves destinés à être connectés chacun à un bus série de communication selon le protocole LIN,
ces données étant émises sur le bus par le module maître à au moins deux vitesses de transmission différentes, chaque module esclave comportant des moyens pour déterminer à chaque émission de données la vitesse de transmission de ces données et des moyens pour reconnaître les données ainsi émises si la vitesse de transmission de ces données est égale à sa propre vitesse de transmission ou pour écarter ces données si leur vitesse de transmission est différente.

Avec cette configuration, il devient possible de faire fonctionner sur un même bus LIN des éléments électroniques d'un véhicule fonctionnant habituellement à des vitesses de transmission différentes.

Selon une autre caractéristique particulière de l'invention, lesdits moyens de détermination de la vitesse de transmission des données émises comportent des moyens de détermination de la durée d'un signal de coupure (Break) informant du début de ces données. Ces moyens de détermination de la vitesse de transmission des données émises peuvent comporter en outre des moyens de détermination de la fréquence d'un signal de synchronisation (Sync) compris dans les données émises.

Les moyens de reconnaissance des données émises comportent des moyens de synchronisation d'une base de temps du module esclave sur la fréquence de transmission des données émises.

L'invention concerne aussi un procédé de transmission de données entre un module maître et des modules esclaves destinés à être connectés chacun à un bus série de communication selon le protocole LIN, dans lequel, ces données étant émises sur le bus par le module maître à au moins deux vitesses de transmission différentes, on détermine au niveau de chaque module esclave et à chaque émission de données, la vitesse de transmission de ces données et on reconnaît les données ainsi émises si la vitesse de transmission de ces données est égale à sa propre vitesse de transmission ou on écarte ces données si leur vitesse de transmission est différente.

L'étape de détermination de la vitesse de transmission des données émises comporte une étape de détermination de la durée d'un signal de coupure (Break) informant du début de ces données et en outre une étape de détermination de la fréquence d'un signal de synchronisation (Sync) compris dans les données émises.

L'invention se rapporte également au programme informatique comportant des instructions de code pour la réalisation des étapes du procédé de transmission de données précité lorsqu'il est exécuté par un microcontrôleur d'un module esclave fonctionnant à une vitesse de transmission déterminée.

D'autres caractéristiques et avantages de la présente invention ressortiront de la description faite ci-dessous, en référence aux dessins annexés qui en illustrent un exemple de réalisation dépourvu de tout caractère limitatif, sur lesquels :
- la figure 1 est une représentation schématique d'un réseau de communication organisé autour d'un bus LIN ;
- la figure 2 est une représentation schématique du format des messages tels qu'envoyés sur le bus de communication par un module maître ; et
- la figure 3 est un schéma illustrant les différentes étapes du procédé mis en oeuvre selon la présente invention.

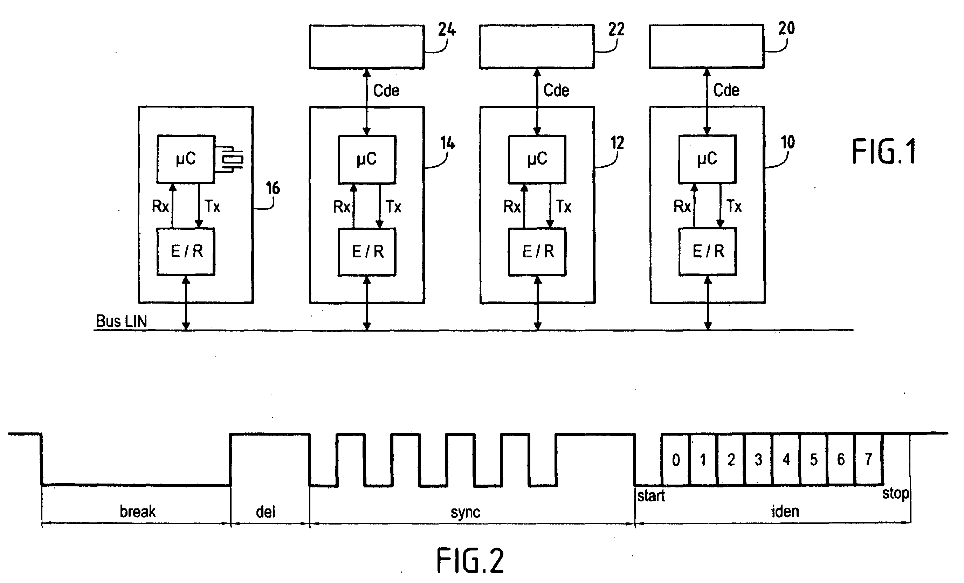

Dans les architectures de communication basées sur le bus LIN, ainsi que représenté sur la figure 1, des modules 10, 12, 14 dits esclaves assurant l'interface avec les différents éléments électroniques du véhicule 20, 22, 24 sont connectés au bus série de communication LIN. Un module 16 dit maître, unique, gère les communications sur le bus de communication LIN.

Ainsi que représenté, les modules esclaves 10, 12, 14 incluent classiquement un microcontrôleur µC relié à l'élément électronique du véhicule à interfacer (indicateur, capteur ou actionneur) et dialoguant en réception Rx et en transmission Tx avec un Emetteur/Récepteur de contrôle du bus série de communication LIN. Le module maître 16 comporte en outre une horloge dont l'oscillateur contrôlé, de préférence à quartz, permet de définir avec précision la vitesse (ou fréquence) de transmission des données sur le bus.

La figure 2 représente schématiquement la structure des messages véhiculés sur le bus LIN, plus précisément la première partie de ce message adressée par le module maître sur le bus, la seconde partie (non représentée) étant retournée en réponse par le module esclave dont une réponse est requise par le module maître. Le module esclave concerné peut aussi ne pas répondre ou adresser sa réponse à un autre module esclave.

Typiquement, la première partie du message comprend trois champs : un champ de début de trame composé d'un signal de coupure (Break), au niveau bas (niveau dominant) qui est établi dans l'exemple de réalisation sur au moins 13 périodes, tel qu'imposé par le protocole LIN (la fréquence d'une période correspondant à la fréquence de transmission) et d'un signal de délimitation (Del), au niveau haut qui est établi dans l'exemple réalisation sur au moins 1 période, également imposée par la norme du protocole LIN, un champ de synchronisation composé d'un signal de synchronisation (Sync) qui donne une base de temps pour la synchronisation des modules esclaves sur la fréquence de transmission du message et représente en hexadécimal le caractère 55, et un champ d'identification (Iden) incluant un bit de start, un identifiant du message, deux bits de parité et un bit de stop. L'identifiant du message comprend des informations sur l'émetteur du message, le destinataire, le but et la longueur du champ de données.

Le module maître va initialiser la communication en envoyant le message à tous les modules esclaves, chacun analysant le contenu du message reçu pour déterminer par re-synchronisation la vitesse de transmission (baud rate) et, une fois celle-ci déterminée, déterminer la tache qui lui incombe en propre.

Selon l'invention, les modules esclaves fonctionnant à des vitesses de transmission différentes, par exemple à 2400 bauds pour le module 10 et à 9600 bauds pour le module 12 et à 19200 bauds pour le module 14, le module maître doit pouvoir émettre des messages avec ces vitesses de transmission différentes et les modules esclaves doivent pouvoir reconnaître et répondre aux messages qui leur sont destinés.

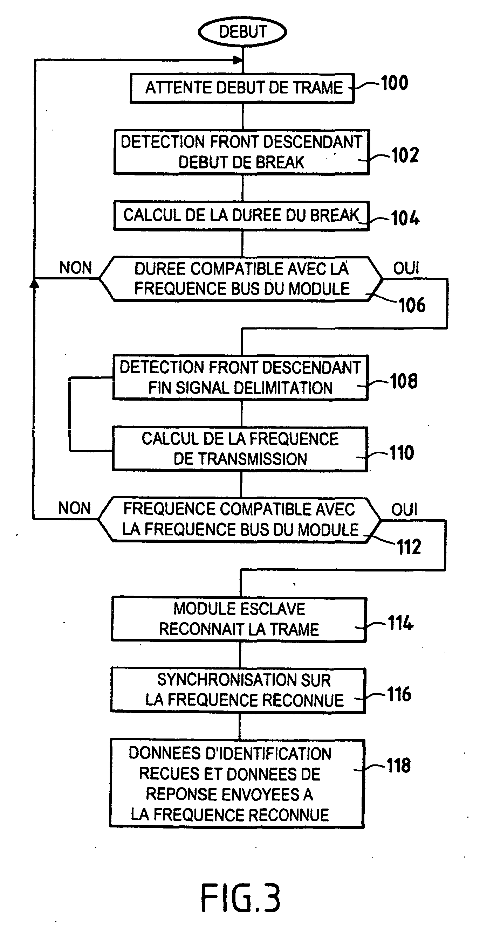

La figure 3 est un organigramme représentant les différentes étapes mises en oeuvre au niveau d'un module esclave pour permettre cette reconnaissance. Sur cette figure, l'invention est décrite en référence à un module esclave fonctionnant selon la norme LIN autorisant trois vitesses de transmission. Mais, bien entendu elle trouverait application également à des modules fonctionnant à d'autres vitesses de transmission et notamment à des vitesses de 4800 bauds ou 14400 bauds par exemple.

La première étape 100 du procédé consiste à réceptionner le début de la trame adressée par le module maître et dans une étape immédiatement suivante 102 à détecter un front descendant synonyme du début de signal Break du champ de début de trame. Il est alors procédé au moyen d'un temporisateur (timer) et d'un compteur à la détermination de la durée de ce signal Break dans une étape 104.

La durée du signal Break est un élément essentiel de la détermination de la vitesse de transmission. On sait en effet, que pour une vitesse de transmission de 19200 bauds, cette durée est comprise entre 0,68 ms et 1,46 ms, que pour une vitesse de transmission de 9600 bauds, cette durée est comprise entre 1,35 ms et 2,92 ms, et que pour une vitesse de transmission de 2400 bauds, cette durée est comprise entre 5,42 ms et 11,67 ms.

Ainsi, il est possible dans une étape 106 de déterminer la compatibilité de cette durée de break avec la vitesse (ou fréquence) de transmission des données. Par exemple, si la durée mesurée est inférieure à 1,35 ms, cela signifie que la trame a été émise à une vitesse de 19200 bauds et les modules esclaves fonctionnant à 2400 bauds et 9600 bauds peuvent alors retourner dans l'étape 100 d'attente du début d'une nouvelle trame. De même, si la durée mesurée D est comprise entre 1,35 ms et 1,46 ms, cela signifie que la trame a été émise à une vitesse de 9600 bauds ou de 19200 bauds et le module esclave fonctionnant à 2400 bauds peut alors retourner dans l'étape 100 d'attente du début d'une nouvelle trame. Pareillement, si la durée mesurée D est comprise entre 1,46 ms et 2,92 ms, cela signifie que la trame a été émise à une vitesse de 9600 bauds et les modules esclave fonctionnant à 2400 bauds et 19200 bauds peuvent alors retourner dans l'étape 100 d'attente du début d'une nouvelle trame. Enfin, si la durée mesurée D est supérieure à 2,92 ms, cela signifie que la trame a été émise à une vitesse de 2400 bauds et les modules esclaves fonctionnant à 9600 bauds et 19200 bauds peuvent alors retourner dans l'étape 100 d'attente du début d'une nouvelle trame.

Il est ensuite procédé dans une étape suivante 108 à la détection du front descendant du signal de délimitation signalant le début du champ de synchronisation et au calcul, dans une étape 110, de la fréquence de transmission du message reçu à partir du signal de synchronisation de ce champ.

Selon le présent exemple de réalisation, à l'étape 110, la détection d'un signal Break d'une durée compatible renvoie à l'étape 108. En effet, tout front descendant lance une reconnaissance d'un signal Break de la part du module. Cette reconnaissance d'un signal Break est réalisée éventuellement en parallèle des autres réceptions et des autres émissions.

Ainsi, il est possible de déterminer la fréquence de transmission du message reçu et notamment la détermination, dans une étape 112, de sa compatibilité avec la fréquence de transmission propre du module. Si celle-ci s'avère incompatible, le module esclave fera retour à l'étape 100 d'attente du début d'une nouvelle trame. Dans le cas contraire, le module concerné va dans une nouvelle étape 114 reconnaître le message comme lui étant destiné et, une fois cette reconnaissance effectué, va procéder dans une étape 116, à une synchronisation de la base de temps du module esclave avec celle du module maître afin de permettre, dans l'étape terminale 118, de recevoir les données du champ d'identification et d'adresser ensuite des données de réponse demandées à la vitesse (fréquence) de transmission reconnue.

L'invention est particulièrement adaptée à une communication sur un même bus série avec des modules à 9600 bauds et 19200 bauds.

Mais on peut remarquer que des mises en oeuvre diverses peuvent être réalisées selon les principes de l'invention. Notamment, on souligne ici que l'invention peut être mise en oeuvre indifféremment dans tous types de modules esclaves susceptibles d'être relié à un bus LIN.

## Revendications

1. Système de transmission de données comportant un module maître (16) et des modules esclaves (10, 12, 14) destinés à être connectés chacun à un bus série de communication selon le protocole LIN, le module maître étant agencé pour émettre ces données sur le bus à au moins deux vitesses de transmission différentes, et chaque module esclave comportant des moyens pour déterminer à chaque émission de données la vitesse de transmission de ces données, le système étant **caractérisé en ce que** chaque module esclave comporte des moyens pour reconnaître les données ainsi émises si la vitesse de transmission de ces données est égale à sa propre vitesse de transmission ou pour écarter ces données si leur vitesse de transmission est différente.

2. Système selon la revendication 1, **caractérisé en ce que** lesdits moyens de détermination de la vitesse de transmission des données émises comportent des moyens de détermination de la durée d'un signal de coupure (Break) informant du début de ces données.

3. Système selon la revendication 2, **caractérisé en ce que** lesdits moyens de détermination de la vitesse de transmission des données émises comportent en outre des moyens de détermination de la fréquence d'un signal de synchronisation (Sync) compris dans les données émises.

4. Système selon l'une quelconque des revendications 1 à 3, **caractérisé en ce que** lesdits moyens de reconnaissance des données émises comportent des moyens de synchronisation d'une base de temps du module esclave sur la fréquence de transmission des données émises.

5. Procédé de transmission de données entre un module maître (16) et des modules esclaves (10, 12, 14) destinés à être connectés chacun à un bus série de communication selon le protocole LIN, dans lequel ces données sont émises sur le bus par le module maître à au moins deux vitesses de transmission différentes et on détermine (110), au niveau de chaque module esclave et à chaque émission de données, la vitesse de transmission de ces données le procédé étant **caracterisé en ce que** l'on reconnaît (114) les données ainsi émises si la vitesse de transmission de ces données est égale à sa propre vitesse de transmission ou on écarte ces données si leur vitesse de transmission est différente.

6. Procédé selon la revendication 5, **caractérisé en ce que** l'étape de détermination de la vitesse de transmission des données émises comporte une étape (104) de détermination de la durée d'un signal de coupure (Break) informant du début de ces données.

7. Procédé selon la revendication 6, **caractérisé en ce que** l'étape de détermination de la vitesse de transmission des données émises comporte en outre une étape (110) de détermination de la fréquence d'un signal de synchronisation (sync) compris dans les données émises.

8. Programme informatique comportant des instructions de code pour la réalisation des étapes du procédé de transmission de données selon les revendications 5 à 7 lorsqu'il est exécuté par un microcontrôleur d'un module esclave fonctionnant à une vitesse de transmission déterminée.

## Claims

1. System for transmitting data comprising a master module (16) and slave modules (10, 12, 14) intended each to be connected to a serial communication bus according to the LIN protocol,
the master module being designed to send these data on the bus at at least two different transmission speeds, and each slave module comprising means for determining the transmission speed of these data at each data send, the system being **characterized in that** each slave module comprises means for recognizing the data thus sent if the transmission speed of these data is equal to its own transmission speed or for discarding these data if their transmission speed is different.

2. System according to Claim 1, **characterized in that** the said means for determining the transmission speed of the sent data comprise means for determining the duration of a cutoff signal (Break) informing of the start of these data.

3. System according to Claim 2, **characterized in that** the said means for determining the transmission speed of the sent data furthermore comprise means for determining the frequency of a synchronization signal (Sync) included in the sent data.

4. System according to any one of Claims 1 to 3, **characterized in that** the said means for recognizing the sent data comprise means for synchronizing a time base of the slave module to the transmission frequency of the sent data.

5. Method for transmitting data between a master module (16) and slave modules (10, 12, 14) intended each to be connected to a serial communication bus according to the LIN protocol, in which these data are sent on the bus by the master module at at least two different transmission speeds, and the transmission speed of these data is determined (110) at the level of each slave module and at each data send, the method being **characterized in that** the data thus sent are recognized (114) if the transmission speed of these data is equal to its own transmission speed or these data are discarded if their transmission speed is different.

6. Method according to Claim 5, **characterized in that** the step of determining the transmission speed of the sent data comprises a step (104) of determining the duration of a cutoff signal (Break) informing of the start of these data.

7. Method according to Claim 6, **characterized in that** the step of determining the transmission speed of the sent data furthermore comprises a step (110) of determining the frequency of a synchronization signal (sync) included in the sent data.

8. Computer program comprising code instructions for the carrying out of the steps of the method for transmitting data according to Claims 5 to 7 when it is executed by a microcontroller of a slave module operating at a determined transmission speed.

## Patentansprüche

1. Datenübertragungssystem, das ein Master-Modul (16) und Slave-Module (10, 12, 14) aufweist, die dazu bestimmt sind, je mit einem seriellen Kommunikationsbus gemäß dem LIN-Protokoll verbunden zu werden,
wobei das Master-Modul eingerichtet ist, um diese Daten auf dem Bus mit mindestens zwei verschiedenen Übertragungsgeschwindigkeiten zu senden, und jedes Slave-Modul Einrichtungen aufweist, um bei jeder Datensendung die Übertragungsgeschwindigkeit dieser Daten zu bestimmen, wobei das System **dadurch gekennzeichnet ist, dass** jedes Slave-Modul Einrichtungen aufweist, um die so gesendeten Daten zu erkennen, wenn die Übertragungsgeschwindigkeit dieser Daten gleich seiner eigenen Übertragungsgeschwindigkeit ist, oder diese Daten zu beseitigen, wenn ihre Übertragungsgeschwindigkeit anders ist.

2. System nach Anspruch 1, **dadurch gekennzeichnet, dass** die Einrichtungen zur Bestimmung der Übertragungsgeschwindigkeit der gesendeten Daten Einrichtungen zur Bestimmung der Dauer eines Abschaltsignals (Break) aufweisen, das über den Beginn dieser Daten informiert.

3. System nach Anspruch 2, **dadurch gekennzeichnet, dass** die Einrichtungen zur Bestimmung der Übertragungsgeschwindigkeit der gesendeten Daten außerdem Einrichtungen zur Bestimmung der Frequenz eines Synchronisationssignals (Sync) aufweisen, das in den gesendeten Daten enthalten ist.

4. System nach einem der Ansprüche 1 bis 3, **dadurch gekennzeichnet, dass** die Einrichtungen zur Erkennung der gesendeten Daten Einrichtungen zur Synchronisation einer Zeitbasis des Slave-Moduls mit der Übertragungsfrequenz der gesendeten Daten aufweisen.

5. Verfahren zur Datenübertragung zwischen einem Master-Modul (16) und Slave-Modulen (10, 12, 14), die dazu bestimmt sind, je mit einem seriellen Kommunikationsbus gemäß dem LIN-Protokoll verbunden zu werden, bei dem diese Daten auf dem Bus durch das Master-Modul mit mindestens zwei verschiedenen Übertragungsgeschwindigkeiten gesendet werden, und im Bereich jedes Slave-Moduls und bei jeder Datensendung die Übertragungsgeschwindigkeit dieser Daten bestimmt wird (110), wobei das Verfahren **dadurch gekennzeichnet ist, dass** die so gesendeten Daten erkannt werden (114), wenn die Übertragungsgeschwindigkeit dieser Daten gleich seiner eigenen Übertragungsgeschwindigkeit ist, oder diese Daten beseitigt werden, wenn ihre Übertragungsgeschwindigkeit anders ist.

6. Verfahren nach Anspruch 5, **dadurch gekennzeichnet, dass** der Schritt der Bestimmung der Übertragungsgeschwindigkeit der gesendeten Daten einen Schritt (104) der Bestimmung der Dauer eines Unterbrechungssignals (Break) aufweist, das über den Beginn dieser Daten informiert.

7. Verfahren nach Anspruch 6, **dadurch gekennzeichnet, dass** der Schritt der Bestimmung der Übertragungsgeschwindigkeit der gesendeten Daten außerdem einen Schritt (110) der Bestimmung der Frequenz eines Synchronisationssignals (Sync) aufweist, das in den gesendeten Daten enthalten ist.

8. EDV-Programm, das Codeanweisungen zur Durchführung der Schritte des Datenübertragungsverfahrens nach den Ansprüchen 5 bis 7 aufweist, wenn es von einem Mikrocontroller eines Slave-Moduls ausgeführt wird, das mit einer bestimmten Übertragungsgeschwindigkeit arbeitet.
